(19) Europäisches Patentamt
European Patent Office
Office européen des brevets

(11) **EP 4 398 478 A1**

(12) **EUROPEAN PATENT APPLICATION**
published in accordance with Art. 153(4) EPC

(43) Date of publication:
**10.07.2024 Bulletin 2024/28**

(21) Application number: **22863522.3**

(22) Date of filing: **31.08.2022**

(51) International Patent Classification (IPC):
*H02P 21/05* (2006.01)        *H02P 21/22* (2016.01)
*H02P 25/024* (2016.01)        *H02P 27/08* (2006.01)
*H02M 1/12* (2006.01)          *H02M 7/48* (2007.01)
*H02J 3/01* (2006.01)          *H02J 1/02* (2006.01)
*H01P 1/212* (2006.01)         *H01S 3/109* (2006.01)
*H03B 1/04* (2006.01)          *G01R 23/16* (2006.01)

(52) Cooperative Patent Classification (CPC):
G01R 23/16; H01P 1/212; H01S 3/109; H02J 1/02;
H02J 3/01; H02M 1/12; H02M 7/48; H02P 21/00;
H02P 21/05; H02P 21/22; H02P 25/024;
H02P 27/08; H02P 29/50; H03B 1/04; Y02E 40/40

(86) International application number:
**PCT/CN2022/116213**

(87) International publication number:
**WO 2023/030387 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2021 CN 202111024658**

(71) Applicant: **Bosch Huayu Steering Systems Co.,
Ltd.
Shanghai 201821 (CN)**

(72) Inventors:
• **YU, Zhigang
Shanghai 201821 (CN)**
• **LI, Shuo
Shanghai 201821 (CN)**
• **SUN, Rui
Shanghai 201821 (CN)**

(74) Representative: **Hannke, Christian
Hannke Bittner & Partner
Patent- und Rechtsanwälte mbB
Prüfeninger Straße 1
93049 Regensburg (DE)**

(54) **METHOD FOR SUPPRESSING 24TH-ORDER NOISE OF ELECTRIC MOTOR ON BASIS OF HARMONIC CURRENT INJECTION**

(57) Provided is a method for suppressing 24th-order noise of an electric motor on the basis of harmonic current injection. The method comprises: converting a three-phase current of an electric motor, which is collected by a three-phase current sampling module, into an id feedback current and an iq feedback current; injecting, into the iq feedback current, a harmonic current $iq_{comp}$ of a 6th-order electrical frequency, and calibrating the values of a compensated 6th harmonic amplitude $i_{gain}$ of the iq feedback current and an initial phase angle $\theta_{offset}$, so as to offset a 6th-order harmonic component in the iq feedback current; making an id instruction current and the id feedback current, and an iq instruction current and the iq feedback current respectively pass through a PI controller, and then performing adjustments to obtain a ud* control voltage and a uq* control voltage; and transforming the ud* control voltage and the uq* control voltage into a uα* voltage and a uβ* voltage by means of inverse Clark transformation and inverse Park transformation, such that the electric motor is controlled by means of the uα* voltage and the uβ* voltage, thereby achieving the aim of suppressing 24th-order noise of the electric motor.

FIG. 1

**Description**

The present application claims the priority of Chinese patent application 202111024658.2 filed on 2021/9/2. The contents of the Chinese patent application are incorporated herein by reference in their entireties.

**TECHNICAL FIELD**

The invention relates to the technical field of electric motor noise suppression, specifically to a method for suppressing 24th-order noise of an electric motor on the basis of harmonic current injection.

**BACKGROUND**

With the development of automobile industry, people's requirements for automobile comfort are gradually increasing. Electronic power steering EPS, especially electronic power steering of column-type EPSC, is prone to customer complaints due to the fact that the drivers are more likely to receive 24th-order noise of the electric motor as its electronic power drive unit is installed in the cockpit.

The main sources of 24th-order noise include electric motor Back EMF harmonics, switching tube dead-time effect, and 5th and 7th harmonics of three-phase current caused by SVPWM control mode.

Therefore, there is a need to design a method for suppressing 24th-order noise of an electric motor on the basis of harmonic current injection, to suppress 24th-order noise of the electric motor effectively and reduce EPS electric motor 24th-order noise.

**CONTENT OF THE PRESENT INVENTION**

The present invention aims to overcome the deficiencies of the prior art, and provides a method for suppressing 24th-order noise of an electric motor on the basis of harmonic current injection, to suppress 24th-order noise of the electric motor effectively and reduce EPS electric motor 24th-order noise.

In order to achieve the above purpose, the present invention provides a method for suppressing 24th-order noise of an electric motor on the basis of harmonic current injection, which comprises the following steps: step 1, converting a three-phase current of an electric motor, which is collected by a three-phase current sampling module, into an id feedback current and an iq feedback current by means of Clark transformation and Park transformation; step 2, injecting, into the iq feedback current, a 6th-order electrical frequency harmonic current $iq_{comp}$ of; step 3, for the iq feedback current after injecting the 6th-order electrical frequency harmonic current, calibrating the values of a compensated 6th harmonic amplitude $i_{gain}$ of the iq feedback current and a compensated 6th harmonic initial phase angle $\theta_{offset}$ of the iq feedback current, so as to offset a 6th-order harmonic component in the iq feedback current; step 4, making an id instruction current and the id feedback current, and an iq instruction current and the iq feedback current respectively pass through a PI controller, and then performing adjustments to obtain a ud* control voltage and a uq* control voltage; step 5, transforming the ud* control voltage and the uq* control voltage into a uα* voltage and a uβ* voltage by means of inverse Clark transformation and inverse Park transformation, such that the electric motor is controlled by means of the uα* voltage and the uβ* voltage, thereby achieving the aim of suppressing 24th-order noise of the electric motor.

The compensation formula of the 6th-order electric frequency harmonic current $iq_{comp}$ is $iq_{comp}=i_{gain}\times\sin(6w_et+\theta_{offset})$, $i_{gain}$ is a compensated 6th harmonic amplitude of the iq current, $\theta_{offset}$ is a compensated 6th harmonic initial phase angle of the iq current, $w_e$ is the electric angular velocity frequency, and t is the time.

The values of the calibrated compensated 6th harmonic amplitude of the iq current $i_{gain}$ and the compensated 6th harmonic initial phase angle of the iq current $\theta_{offset}$ are determined by observing the compensation effect from the FFT analysis data of the 24th-order electric motor torque.

The id instruction current and the iq instruction current are generated by the current instruction generating module.

Compared with the prior art, the present invention realizes the suppression of 24th-order noise, reducing the noise of the EPS electric motor, and enhancing the driver's ride comfort by injecting 6th-order electrical frequency harmonics into the iq current and calibrating the values of $i_{gain}$ and $\theta_{offset}$ to offset the 6th-order harmonic component in the iq current.

**BRIEF DESCRIPTION OF THE DRAWINGS**

FIG. 1 is a control flowchart of the method for suppressing 24th-order noise of an electric motor on the basis of harmonic current injection of the present invention.
FIG. 2 is a schematic diagram of the 24th-order harmonics of the electric motor torque before current harmonic injection.
FIG. 3 is a schematic diagram of the 24th-order harmonics of the electric motor torque after current harmonic injection.
FIG. 4 is a sectional view of of a partial structure of the electric motor of the present invention.

**DETAILED DESCRIPTION OF THE PREFERRED EMBODIMENT**

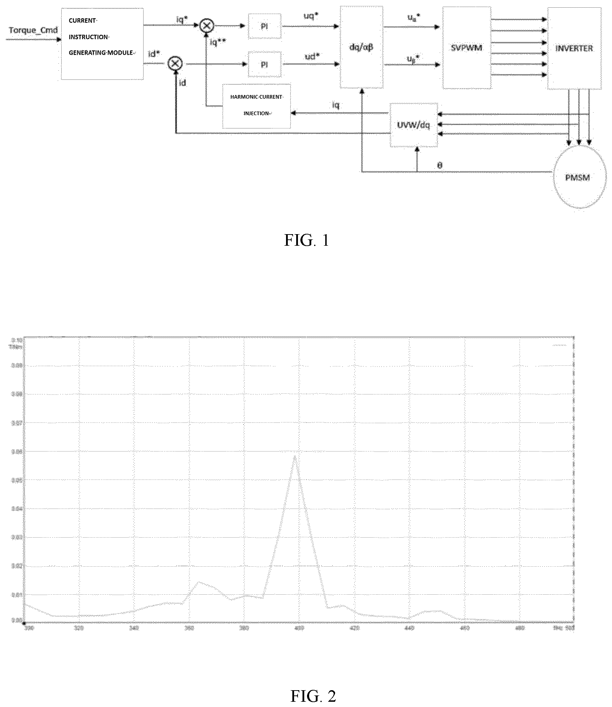

The present invention is further described with reference to FIGs. 1-4.

Analysis of the source of the 24th-order noise of the electric motor: FFT analysis of the electric motor torque shows that the 24th-order harmonic content in the electric motor torque is significantly higher than other orders, which shows that the 24th-order noise of the electric motor comes from the 24th-order harmonic of the electric motor torque.

Derivation of the source of the 24th-order noise of the electric motor:

The equations of three-phase current with 5th and 7th harmonics are as follows: $ia=i_1\times\cos(w_et+\theta_1)+i_5\times\cos(-5w_et+\theta_5)+i_7\times\cos(7w_et+\theta_7)$ ①, $ib=i_1\times\cos(w_et+\theta_1-2/3\times pi)+i_5\times\cos(-5w_et+\theta_5-2/3\times pi)+i_7\times\cos(7w_et+\theta_7-2/3\times pi)$ ②, $ic=i_1\times\cos(w_et+\theta_1+2/3\times pi)+i_5\times\cos(-5w_et+\theta_5+2/3\times pi)+i_7\times\cos(7w_et+\theta_7+2/3\times pi)$③. Wherein $i_1$ is the amplitude of fundamental wave of phase current, is is the amplitude of 5th harmonic wave, $i_7$ is the amplitude of 7th harmonic wave, $\theta_1$ is the initial phase angle of fundamental wave, $\theta_5$ is the initial phase angle of 5th harmonic wave, $\theta_7$ is the initial phase angle of 7th harmonic wave, and $w_e$ is the electric angular velocity frequency.

The equations of Park transformation and Clark transformation are as follows.

$$C3s-2s = \frac{2}{3}*\begin{pmatrix} 1 & -1/2 & -1/2 \\ 0 & \sqrt{3}/2 & -\sqrt{3}/2 \end{pmatrix}$$ ④,

$$C2s-2r = \begin{pmatrix} cos\theta & sin\theta \\ -sin\theta & cos\theta \end{pmatrix}$$ ⑤.

Solve the simultaneous equations ① ② ③ ④ ⑤ : $id=i_1\times\cos(\theta_1)+i_5\times\cos(-6w_et-\theta_5)+i_7\times\cos(6w_et+\theta_7)$ ⑥, $iq=i_1\times\sin(\theta_1)+i_5\times\sin(-6w_et-\theta_5)+i_7\times\sin(6w_et+\theta_7)$ ⑦.

The relationship between mechanical angular velocity frequency and electric angular velocity frequency: $w_e=w_m\times n_p$ ⑧. Wherein $w_m$ is the mechanical angular velocity frequency and $n_p$ is the number of electric motor poles.

Electric motor torque equation: $T_e=1.5\times n_p\times i_q\times[id\times(Ld-Lq)+\psi f]$ ⑨.

In the embodiment of the invention, the electric motor is a hidden pole motor, i.e. Ld=Lq. According to equation ⑨, id has no effect on torque, and therefore no torque harmonics are generated, so there is no need to inject current harmonics into the id current.

Bringing equations ⑥ ⑦ ③ into ⑨ , it can be seen that: $Te=1.5\times n_p\times\psi f\times[i_1\times\sin(\theta_1)+i_5\times\sin(-6w_et-\theta_5)+i_7\times\sin(6w_et+\theta_7)]$ ⑩, wherein $\psi f$ is the magnetic chain of the permanent magnet of the electric motor rotor.

It can be seen from equation ⑧⑩: $T_e=1.5\times n_p\times\psi f\times[i_1\times\sin(\theta_1)+i_5\times\sin(-24w_mt-\theta_5)+i_7\times\sin(24w_mt+\theta_7)]$⑪.

From the above derivation, it can be seen that the 5th and 7th harmonics in the three-phase current of the electric motor lead to the 24th-order harmonic is contained in the electric motor torque, thus causing the 24th-order noise of the electric motor that can be heard by human ears.

Referring to FIG. 1, a method for suppressing 24th-order noise of an electric motor on the basis of harmonic current injection, which comprises the following steps:

Step 1, converting a three-phase current of an electric motor, which is collected by a three-phase current sampling module, into an id feedback current and an iq feedback current by means of Clark transformation and Park transformation.

Step 2, injecting, into the iq feedback current, a 6th-order electrical frequency harmonic current $iq_{comp}$, and the compensation equation of the 6th-order electric frequency harmonic current $iq_{comp}$ is $iq_{comp}=i_{gain}\times\sin(6w_et+\theta_{offset})$, $i_{gain}$ is a compensated 6th harmonic amplitude of the iq current, $\theta_{offset}$ is a compensated 6th harmonic initial phase angle of the iq current, $w_e$ is the electric angular velocity frequency, and t is the time.

Step 3, for the iq feedback current after injecting the 6th-order electrical frequency harmonic current, calibrating the values of a compensated 6th harmonic amplitude $i_{gain}$ of the iq feedback current and a compensated 6th harmonic initial phase angle $\theta_{offset}$ of the iq feedback current, so as to offset a 6th-order harmonic component in the iq feedback current. Wherein the step of calibrating the values of a compensated 6th harmonic amplitude $i_{gain}$ of the iq feedback current and a compensated 6th harmonic initial phase angle $\theta_{offset}$ of the iq feedback current is determined by observing the compensation effect from the FFT analysis data of the 24th-order electric motor torque.

Step 4, the id instruction current and the iq instruction current are generated by the current instruction generating module. The id instruction current and the id feedback current, and an iq instruction current and the iq feedback current respectively pass through a PI controller, and then performing adjustments to obtain a ud* control voltage and a uq* control voltage.

Step 5, transforming the ud* control voltage and the uq* control voltage into a uα* voltage and a uβ* voltage by means of inverse Clark transformation and inverse Park transformation, such that the electric motor is controlled by means of the uα* voltage and the uβ* voltage, thereby achieving the aim of suppressing 24th-order noise of the electric motor.

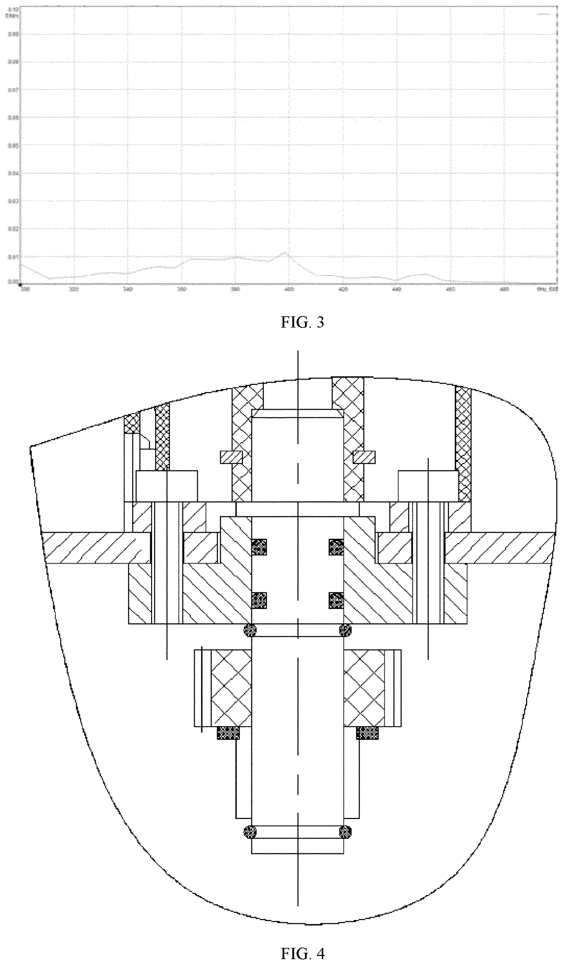

Referring to FIG. 2 and FIG. 3, high-precision torque sensors are used to collect electric motor torque data without compensation and after compensation respectively, and FFT analysis is carried out on electric motor torque, and the 24th-order harmonic changes of electric motor torque before and after current harmonic injection are observed. Compared with the data before and after the current harmonic injection, the amplitude of the 24-order harmonic of the electric motor torque is obviously suppressed after the 6th-order iq current harmonic is injected, and the method of the invention is effective in practicet.

The present invention realizes the suppression of 24th-order noise, reducing the noise of the EPS electric motor, and enhancing the driver's ride comfort by injecting 6th-order electrical frequency harmonics into the iq current and calibrating the values of $i_{gain}$ and $\theta_{offset}$ to offset the 6th-order harmonic component in the iq current.

Although specific embodiment of the present invention is described above, it should be understood by those skilled in the art that these are merely illustrative and that a variety of changes or modifications can be made to these embodiments without departing from the principles and substance of the present invention. Accordingly, the scope of protection of the present invention is defined by the appended claims.

**Claims**

1. A method for suppressing 24th-order noise of an electric motor on the basis of harmonic current injection, which is charactized in that, it comprises the following steps: step 1, converting a three-phase current of an electric motor, which is collected by a three-phase current sampling module, into an id feedback current and an iq feedback current by means of Clark transformation and Park transformation; step 2, injecting, into the iq feedback current, a 6th-order electrical frequency harmonic current $iq_{comp}$; step 3, for the iq feedback current after injecting the 6th-order electrical frequency harmonic current, calibrating the values of a compensated 6th harmonic amplitude $i_{gain}$ of the iq feedback current and a compensated 6th harmonic initial phase angle $\theta_{offset}$ of the iq feedback current, so as to offset a 6th-order harmonic component in the iq feedback current; step 4, making an id instruction current and the id feedback current, and an iq instruction current and the iq feedback current respectively pass through a PI controller, and then performing adjustments to obtain a ud* control voltage and a uq* control voltage; step 5, transforming the ud* control voltage and the uq* control voltage into a uα* voltage and a uβ* voltage by means of inverse Clark transformation and inverse Park transformation, such that the electric motor is controlled by means of the uα* voltage and the uβ* voltage, thereby achieving the aim of suppressing 24th-order noise of the electric motor.

2. A method for suppressing 24th-order noise of an electric motor on the basis of harmonic current injection according to claim 1, which is charactized in that, a compensation equation of the 6th-order electric frequency harmonic current $iq_{comp}$ is $iq_{comp}=i_{gain}\times\sin(6w_e t+\theta_{offset})$, $i_{gain}$ is a compensated 6th harmonic amplitude of the iq current, $\theta_{offset}$ is a compensated 6th harmonic initial phase angle of the iq current, $w_e$ is the electric angular velocity frequency, and t is the time.

3. A method for suppressing 24th-order noise of an electric motor on the basis of harmonic current injection according to claim 1, which is charactized in that, the step of calibrating the values of a compensated 6th harmonic amplitude $i_{gain}$ of the iq feedback current and a compensated 6th harmonic initial phase angle $\theta_{offset}$ of the iq feedback current is determined by observing the compensation effect from the FFT analysis data of the 24th-order electric motor torque.

4. A method for suppressing 24th-order noise of an electric motor on the basis of harmonic current injection according to claim 1, which is charactized in that, the id instruction current and the iq instruction current are generated by the current instruction generating module.

FIG. 1

FIG. 2

FIG. 3

FIG. 4

## INTERNATIONAL SEARCH REPORT

| International application No. |
|---|
| **PCT/CN2022/116213** |

**A.    CLASSIFICATION OF SUBJECT MATTER**

H02P 21/05(2006.01)i;  H02P 21/22(2016.01)i;  H02P 25/024(2016.01)i;  H02P 27/08(2006.01)i;  H02M 1/12(2006.01)i;  H02M 7/48(2007.01)i;  H02J 3/01(2006.01)i;  H02J 1/02(2006.01)i;  H01P 1/212(2006.01)i;  H01S 3/109(2006.01)i;  H03B 1/04(2006.01)i;  G01R 23/16(2006.01)i

According to International Patent Classification (IPC) or to both national classification and IPC

**B.    FIELDS SEARCHED**

Minimum documentation searched (classification system followed by classification symbols)

H02P; H02J; H02M; H01P; H01S; H03B; G01R

Documentation searched other than minimum documentation to the extent that such documents are included in the fields searched

Electronic data base consulted during the international search (name of data base and, where practicable, search terms used)

CNABS, CNTXT, DWPI, SIPOABS, USTXT, WOTXT, CNKI, CJFD, IEEE: 谐波, 纹波, 电机, 电动机, 马达, 注入, 补偿, 6阶, 6次, 六阶, 六次, q轴电流, 转矩, 扭矩, 力矩, 24阶, 二十四阶, 24次, 二十四次; harmonic+ , rippl+, compensat+, inject+, current+, torque?, six

**C.    DOCUMENTS CONSIDERED TO BE RELEVANT**

| Category* | Citation of document, with indication, where appropriate, of the relevant passages | Relevant to claim No. |
|---|---|---|
| PX | CN 114244220 A (WUHAN JIAKI TECHNOLOGY CO., LTD.) 25 March 2022 (2022-03-25) description, paragraphs [0012]-[0101], and figures 1-8 | 1-4 |
| X | JIA, Hongyun; MING, Cheng et al. ""Torque Ripple Suppression in Flux-Switching PM Motor by Harmonic"" *IEEE*, 19 May 2010 (2010-05-19), ISSN: 0018-9464, text, pp. 1527-1530 | 1-4 |
| X | 罗科, 任超等 (LUO, Ke; REN, Chao et al.). ""基于离线电流谐波注入的电动汽车电磁噪声优化" (Non-official translation: Optimization of Electromagnetic Noise of Electric Vehicle Based on Off-line Current Harmonic Injection)" *2020中国汽车工程学会年会论文集 (2020 China-SEA Congress Proceedings)*, 27 October 2020 (2020-10-27), text, pp. 1276-1279 | 1-4 |
| X | CN 101860300 A (SOUTHEAST UNIVERSITY) 13 October 2010 (2010-10-13) description, paragraphs [0024]-[0049], and figures 1-5 | 1-4 |

☑ Further documents are listed in the continuation of Box C.       ☑ See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **10 October 2022** | **23 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 398 478 A1**



**EP 4 398 478 A1**

## INTERNATIONAL SEARCH REPORT

| | International application No. |
|---|---|
| | **PCT/CN2022/116213** |

### C. DOCUMENTS CONSIDERED TO BE RELEVANT

| Category* | Citation of document, with indication, where appropriate, of the relevant passages | Relevant to claim No. |
|---|---|---|
| Y | CN 103269200 A (XI'AN INSTITUTE OF SPACE RADIO TECHNOLOGY) 28 August 2013 (2013-08-28)<br>description, paragraphs [0050]-[0123], and figures 1-6 | 1-4 |
| Y | CN 106762653 A (GUANGDONG MIDEA REFRIGERATION EQUIPMENT CO., LTD.) 31 May 2017 (2017-05-31)<br>description, paragraphs [0048]-[0098], and figures 1-11 | 1-4 |
| Y | EP 3297156 A1 (SIEMENS AKTIENGESELLSCHAFT) 21 March 2018 (2018-03-21)<br>description, paragraphs [0050]-[0078], and figures 1-4 | 1-4 |
| A | US 2011298405 A1 (COSTANZO, D. et al.) 08 December 2011 (2011-12-08)<br>entire document | 1-4 |
| A | JP 2013126342 A (TOSHIBA CORP.) 24 June 2013 (2013-06-24)<br>entire document | 1-4 |

| | INTERNATIONAL SEARCH REPORT<br>Information on patent family members | | | International application No.<br>**PCT/CN2022/116213** | | |
|---|---|---|---|---|---|---|

| Patent document<br>cited in search report | | | Publication date<br>(day/month/year) | Patent family member(s) | | Publication date<br>(day/month/year) |
|---|---|---|---|---|---|---|
| CN | 114244220 | A | 25 March 2022 | None | | |
| CN | 101860300 | A | 13 October 2010 | None | | |
| CN | 103269200 | A | 28 August 2013 | CN 103269200 | B | 27 May 2015 |
| CN | 106762653 | A | 31 May 2017 | CN 106762653 | B | 17 August 2018 |
| EP | 3297156 | A1 | 21 March 2018 | None | | |
| US | 2011298405 | A1 | 08 December 2011 | IT 1400456 | B | 31 May 2013 |
| | | | | US 8816616 | B2 | 26 August 2014 |
| JP | 2013126342 | A | 24 June 2013 | JP 5912495 | B2 | 27 April 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111024658
- CN 202192